# DEMANDE DE BREVET EUROPEEN

(11) **EP 2 000 361 A1**
(43) Date de publication de la demande: **10.12.2008**
(21) Numéro de dépôt: 08157803.1
(22) Date de dépôt: 06.06.2008
(51) Int. Cl.: B60R 5/04

(54) **Dispositif cache-bagages à volet mobile, et véhicule correspondant**

(30) Priorité: 06.06.2007 FR 0704048
(71) Demandeur: Wagon SAS, 79302 Bressuire Cédex (FR)
(72) Inventeur: Jincheleau, Michel, 79320, MONCOUTANT (FR)
(74) Mandataire: Bioret, Ludovic

(57) **Abrégé**

L'invention concerne un dispositif cache-bagages pour véhicule automobile équipé d'un hayon, comprenant au moins un écran d'occultation, mobile entre une position repliée et une position déployée.
L'invention est remarquable en ce qu'un volet est solidaire dudit hayon, et mobile par rapport à ce dernier en rotation autour d'un axe de rotation, ledit axe de rotation étant perpendiculaire à l'axe de déplacement dudit écran, et s'étendant au voisinage d'une barre de tirage dudit écran, lorsque ce dernier est dans ladite position déployée, et sensiblement dans le plan défini par ledit écran, de façon à pouvoir prendre au moins deux positions, lorsque ledit hayon est fermée :
- une position fermée, dans laquelle il se trouve dans le prolongement dudit écran, lorsque celui-ci se trouve dans sa position déployée ; et
- une position ouverte, permettant un accès au coffre dudit véhicule, même lorsque ledit écran est dans sa position déployée.

## Description

Le domaine de l'invention est celui des véhicules automobiles. Plus précisément, l'invention concerne les dispositifs cache-bagages équipant de nombreux véhicules, et notamment des véhicules de type « break » ou « monospace », souvent équipés d'un hayon.

Ces cache-bagages sont généralement formés d'un écran mobile, pouvant être déployé depuis une position de rangement, ou replié, vers une position d'occultation, ou déployé, dans laquelle l'écran recouvre l'espace inférieur du coffre, notamment pour en dissimuler son contenu.

Une technique classique de mise en oeuvre des cache-bagages est de monter cet écran sur un tube à enrouleur, qui s'étend au voisinage du dossier des sièges arrière du véhicule. Une barre de tirage permet de déployer l'écran (ou toile, ou store). Dans la position déployée, la barre de tirage est amenée au voisinage du hayon. Selon les cas, la mise en oeuvre de l'écran peut être manuelle ou motorisée.

Un des inconvénients de ces cache-bagages à enrouleur est que l'utilisateur est obligé, pour atteindre un objet qui est placé dans le coffre, ou pour placer un tel objet dans le coffre, de replier complètement la toile. Ceci peut, dans certains cas, ne pas être souhaitable, par exemple si l'utilisateur désire ne pas montrer l'ensemble des objets contenus dans le coffre.

Un autre inconvénient est que l'opération de déploiement du store, lorsqu'on veut le remettre en place est, selon les cas, peu aisée et/ou relativement longue. Elle est peu aisée lorsque la manipulation est manuelle, puisque la barre de tirage se trouve au voisinage du dossier des sièges arrière, c'est-à-dire relativement loin du seuil du véhicule, en particulier pour les breaks ou les véhicules de grande dimension. Elle est relativement longue pour les systèmes motorisés, du fait de la distance que la barre de tirage doit parcourir.

Certaines améliorations ont été proposées, permettant par exemple d'immobiliser l'écran dans une position intermédiaire. Ces systèmes ne sont cependant pas utilisables dans tous les cas.

En particulier, les systèmes classiques ne sont pas utilisables de façon pratique dans le cas de hayons équipés d'une vitre ouvrante. En effet, dans ce cas, l'utilisateur peut souhaiter accéder à son coffre par cette vitre ouvrante, sans ouvrir complètement le hayon, pour prendre ou déposer un objet dans le coffre. Dans cette configuration, il est peu aisé d'ouvrir le cache-bagages, et moins encore de le refermer.

Un autre inconvénient des cache-bagages connus est qu'ils doivent généralement présenter une forme complexe, notamment au niveau de la barre de tirage et/ou à son voisinage, du fait que la largeur du véhicule au voisinage du hayon est généralement plus faible qu'au niveau du tube à enrouleur, et de forme parfois complexe.

Une solution a été proposée, pour résoudre ce problème, consistant à équiper le hayon d'une extension rigide placée dans le prolongement de l'écran lorsqu'il est déployé. Ainsi, la barre de tirage ne doit pas être amenée jusqu'au bord du hayon, mais simplement au bord de cette extension rigide, ce qui simplifie sa fabrication. En revanche, cette approche rend encore plus complexe l'accès au coffre, en particulier par l'intermédiaire d'une fenêtre de hayon, ce dernier restant fermé. En effet, l'extension solidaire du hayon forme un obstacle supplémentaire.

L'invention a notamment pour objectif de pallier ces inconvénients de l'art antérieur.

Plus précisément, un objectif de l'invention est de fournir un dispositif cache-bagages permettant un accès facile à une partie du coffre, sans devoir ouvrir complètement le cache-bagages.

L'invention a notamment pour objectif de fournir un tel dispositif, adapté, selon un mode de réalisation particulier, au hayon équipé de vitres ouvrantes.

Un autre objectif de l'invention est de fournir un tel dispositif cache-bagages, qui soit simple à fabriquer, à monter et à mettre en oeuvre.

Selon un mode de réalisation particulier de l'invention, un objectif complémentaire est de fournir un tel dispositif cache-bagages, qui ne nuise pas au chargement d'objets de taille importante.

Ces objectifs, ainsi que d'autres qui apparaîtront plus clairement par la suite, sont atteints selon l'invention à l'aide d'un dispositif cache-bagages pour véhicule automobile équipé d'un hayon, comprenant au moins un écran d'occultation, mobile entre une position repliée et une position déployée.

Selon l'invention, un tel dispositif comprend un volet solidaire dudit hayon, et mobile par rapport à ce dernier en rotation autour d'un axe de rotation, ledit axe de rotation étant perpendiculaire à l'axe de déplacement dudit écran, et s'étendant au voisinage d'une barre de tirage dudit écran, lorsque ce dernier est dans ladite position déployée, et sensiblement dans le plan défini par ledit écran, de façon à pouvoir prendre au moins deux positions, lorsque ledit hayon est fermée :
- une position fermée, dans laquelle il se trouve dans le prolongement dudit écran, lorsque celui-ci se trouve dans sa position déployée ; et
- une position ouverte, permettant un accès au coffre dudit véhicule, même lorsque ledit écran est dans sa position déployée.

Ainsi, il est possible d'accéder au contenu du coffre (ou au moins à une partie proche du hayon) sans que l'utilisateur soit obligé de déplacer l'écran, qui reste en position fermée.

Ceci permet également d'introduire des objets dans le coffre facilement, toujours sans ouvrir l'écran.

Ceci permet encore le transport d'objets particuliers s'étendant en hauteur, qui peuvent dépasser par l'ouverture définie par le volet, tout en conservant l'écran fermé.

En outre, ledit volet étant placé de façon que, dans la position déployée de l'écran, la barre de tirage de ce dernier soit au voisinage dudit axe de rotation, l'approche de l'invention s'avère ergonomique, au moins dans certaines situations, et par exemple lorsqu'un accès par l'intermédiaire d'une vitre de hayon, ce dernier restant fermé, est possible.

Selon un mode de réalisation avantageux de l'invention, ledit volet est monté sur un élément de garniture solidarisé audit hayon.

Cette approche permet de simplifier le montage et l'assemblage sur le véhicule, et de s'affranchir d'au moins une partie des jeux de fabrication. En effet, le volet est monté préalablement sur l'élément de garniture, indépendamment des jeux relatifs au véhicule.

Selon une mise en oeuvre particulière, ledit volet comprend deux ergots de rotation, coopérant avec des logements prévus à cet effet dans ledit hayon ou dans ledit élément de garniture.

On peut par ailleurs prévoir que ledit élément de garniture comprend des moyens formant butée, maintenant ledit volet dans ladite position fermée. On obtient ainsi un support fiable et simple pour ce volet.

Selon un aspect avantageux de l'invention, ledit volet est désolidarisable dudit hayon. Le volet peut alors être pliable. On peut également prévoir que ledit volet et ledit élément de garniture forment un ensemble amovible.

Ceci permet d'agrandir le volume du coffre, si nécessaire, par exemple pour le transport d'objets encombrants.

Le volet est par ailleurs avantageusement en matière souple, pour ne pas détériorer un objet contre lequel il viendrait en appui, ni se détériorer lui-même.

L'invention concerne également les véhicules automobiles équipés d'un hayon, comprenant un dispositif cache-bagages muni d'un volet mobile tel que décrit ci-dessus.

L'invention concerne notamment de tels véhicules, dont le hayon présente une baie équipée d'une vitre ouvrante, caractérisé en ce que ledit volet est monté de façon à permettre un accès audit coffre, par l'intermédiaire de ladite baie, vitre ouverte, ledit hayon restant fermé.

D'autres caractéristiques et avantages de l'invention apparaîtront plus clairement à la lecture de la description suivante d'un mode de réalisation particulier, donné à titre de simple exemple illustratif et non limitatif, et des dessins annexes parmi lesquels :
- la figure 1 illustre les deux éléments constitutifs d'un dispositif cache-bagages selon un mode de réalisation de l'invention ;
- la figure 2 présente le dispositif de l'invention en position d'occultation, c'est-à-dire de store déroulé ;
- la figure 3 présente le dispositif de la figure 2 lorsque le volet est en position ouverte ;
- la figure 4 est une vue agrandie d'une partie du dispositif des figures précédentes, montrant l'axe de rotation ;
- la figure 5 illustre les moyens de maintien du volet en position fermée.

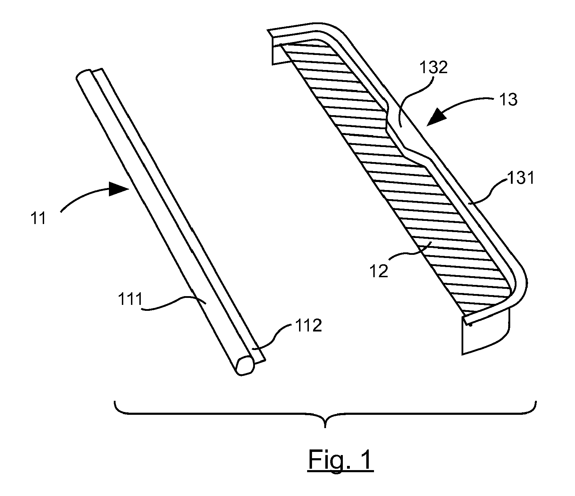

Le dispositif de l'invention est donc constitué d'au moins deux éléments, comme illustré en figure 1 :
- un store à enrouleur 11, classique en soi ;
- un volet mobile 12, monté sur un élément de garniture 13, destiné à être solidarisé à la carrosserie du hayon du véhicule automobile.

La lèvre supérieure 131 de cet élément de garniture 13 est prévue pour s'étendre au voisinage de la partie inférieure de la vitre du hayon. On note que cet élément de garniture peut présenter un bossage 132, destiné à définir l'emplacement d'un moteur d'essuie-glace.

Le store à enrouleur 11 n'est pas décrit en détail. Il comprend un boîtier 111, logeant l'écran d'occultation, dont l'extrémité libre est munie d'une barre de tirage 112. La constitution de ce store à enrouleur est classique. Avantageusement, le boîtier est conçu de façon à pouvoir être aisément désolidarisé du véhicule, pour permettre le transport d'éléments importants ou encombrants.

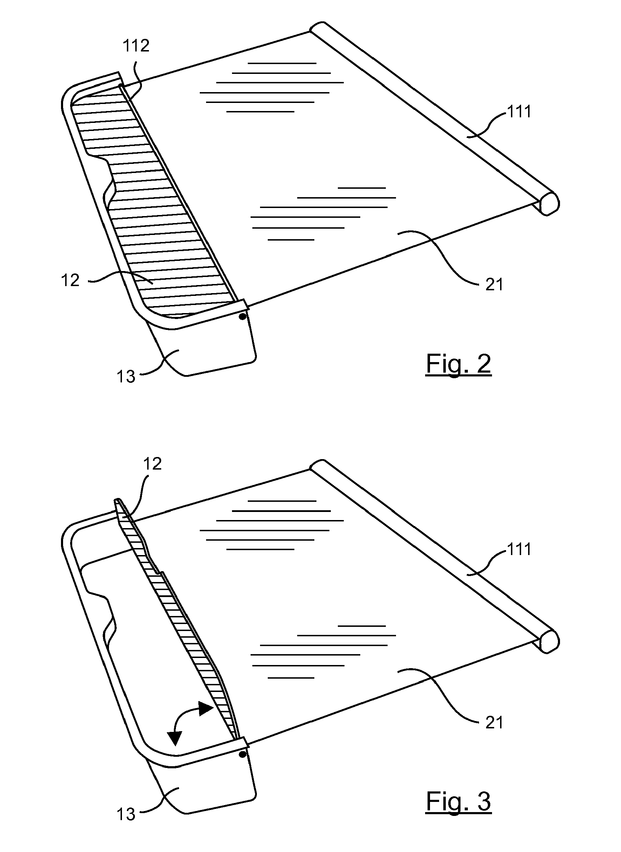

La figure 2 présente le dispositif de l'invention en position d'occultation de l'intérieur du coffre du véhicule. La barre de tirage 112 a été amenée en contact avec le volet 12, de façon à ce que la toile, ou écran, d'occultation 21 coopère avec le volet pour recouvrir intégralement, ou quasi intégralement, la surface du coffre.

Avantageusement, le bord du volet et/ou la barre de tirage sont conformés pour coopérer l'un avec l'autre, et par exemple pour s'imbriquer, de façon à supprimer tout espace entre les deux éléments, ainsi que tout bruit intempestif dû à des chocs l'un contre l'autre.

Selon l'invention, le volet 12 n'est pas une pièce fixe, mais au contraire un élément mobile, de façon à libérer une couverture permettant l'accès au coffre, sans agir sur l'écran 21, comme cela est illustré en figure 3.

Selon le mode de réalisation illustré sur cette figure 3, le volet 12 est mobile en rotation (flèche 31), autour d'un axe s'étendant au voisinage de la barre de tirage 112.

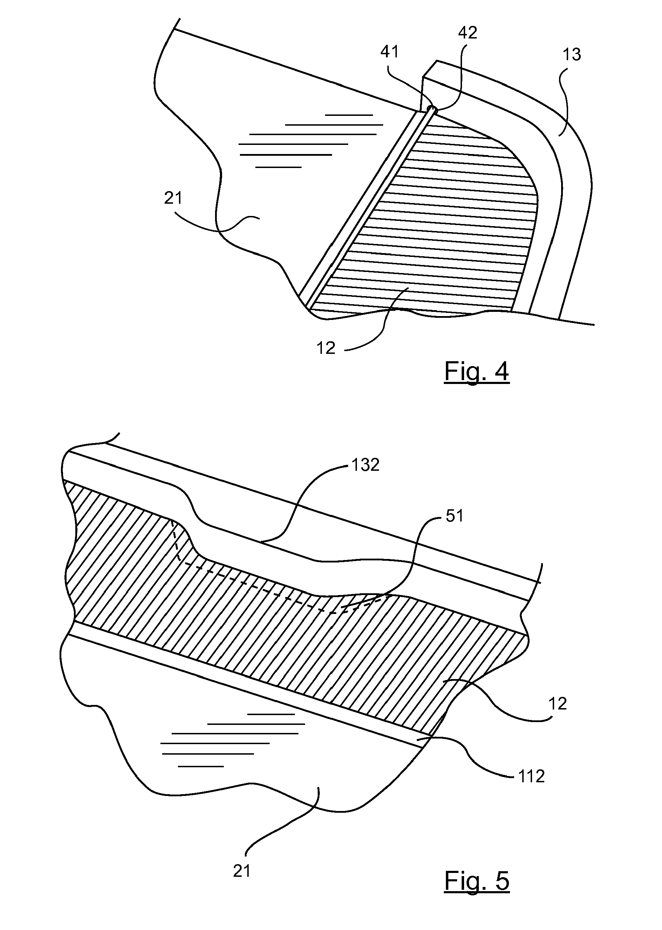

Comme illustré en figure 4, cette rotation peut être assurée par l'intermédiaire d'un doigt, ou ergot, 41 prévu à cet effet sur le volet 12, et pénétrant dans un logement correspondant 42 ménagé dans l'élément de garniture 13. Un doigt similaire est prévu à l'autre extrémité du volet. Selon un autre mode de réalisation, il peut s'agir d'un axe unique, s'étendant sur toute la longueur du volet.

Selon d'autres modes de réalisation, l'axe de rotation peut être placé à proximité du hayon, pour que le volet 12 bascule dans l'autre sens. On peut également prévoir que ce volet bascule vers l'intérieur du coffre, ou qu'il mette en oeuvre une autre cinématique, et par exemple une translation (les ergots étant alors, par exemple, guidés dans des rainures de guidage prévues à cet effet).

On comprend cependant que la solution illustrée en figure 3 est intéressante notamment dans le cas où le hayon du véhicule est équipé d'une vitre mobile. Il est alors aisé, par cette ouverture, et sans ouvrir le hayon, de basculer le volet en position ouverte pour placer dans le coffre un objet, ou se saisir d'un objet (sous réserve bien sûr que sa dimension soit adaptée au passage libéré par le volet).

Comme illustré par la figure 5, la garniture 13 porte avantageusement une zone de support 51, ou de maintien, formant une butée d'appui pour le volet 12, lorsqu'il est en position fermée (figure 2).

Cette zone de support peut s'étendre sur la plus grande partie du bord de l'élément de garniture 13, présenter plusieurs zones de support réparties et comprendre au moins une zone de support centrale au voisinage du bossage 132.

Le volet 12 peut être réalisé en toute matière adéquate, et en particulier en matière plastique. Il peut être rigide. Cependant, selon un mode de réalisation particulier, il est réalisé dans une matière souple, susceptible de se déformer, pour ne pas endommager un objet trop encombrant contre lequel le volet viendrait en contact, lorsque l'on referme le hayon, et que l'on force sur celui-ci, le cas échéant. Ceci permet d'éviter la détérioration de l'objet transporté, et du volet lui-même.

Par ailleurs, ce volet est avantageusement amovible, et le cas échéant pliable, de façon justement à transporter des objets encombrants, occupant tout l'espace disponible du coffre (ou au moins toute sa profondeur). Dans ce cas, on peut par exemple prévoir que le volet 12 est suffisamment souple pour que les ergots 41 puissent être sortis des logements 42. Selon un autre mode de réalisation, il est possible d'envisager que l'élément de garniture équipé du volet soit entièrement démontable, pour dégager encore plus d'espace.

Le volet peut également être adapté pour que seule une (voire plusieurs) portion de sa surface soit mobile.

## Revendications

1. Dispositif cache-bagages pour véhicule automobile équipé d'un hayon, comprenant au moins un écran d'occultation, mobile entre une position repliée et une position déployée,
**caractérisé en ce qu'**il comprend un volet solidaire dudit hayon, et mobile par rapport à ce dernier en rotation autour d'un axe de rotation, ledit axe de rotation étant perpendiculaire à l'axe de déplacement dudit écran, et s'étendant au voisinage d'une barre de tirage dudit écran, lorsque ce dernier est dans ladite position déployée, et sensiblement dans le plan défini par ledit écran, de façon à pouvoir prendre au moins deux positions, lorsque ledit hayon est fermée :
- une position fermée, dans laquelle il se trouve dans le prolongement dudit écran, lorsque celui-ci se trouve dans sa position déployée ; et
- une position ouverte, permettant un accès au coffre dudit véhicule, même lorsque ledit écran est dans sa position déployée.

2. Dispositif cache-bagages selon la revendication 1, **caractérisé en ce que** ledit volet est monté sur un élément de garniture solidarisé audit hayon.

3. Dispositif cache-bagages selon l'une quelconque des revendications 1 et 2, **caractérisé en ce que** ledit volet comprend deux ergots de rotation, coopérant avec des logements prévus à cet effet dans ledit hayon ou dans ledit élément de garniture.

4. Dispositif cache-bagages selon l'une quelconque des revendications 2 et 3, **caractérisé en ce que** ledit élément de garniture comprend des moyens formant butée, maintenant ledit volet dans ladite position fermée.

5. Dispositif cache-bagages selon l'une quelconque des revendications 1 à 4, **caractérisé en ce que** ledit volet est désolidarisable dudit hayon.

6. Dispositif cache-bagages selon les revendications 2 et 5, **caractérisé en ce que** ledit volet et ledit élément de garniture forment un ensemble amovible.

7. Véhicule automobile équipé d'un hayon, **caractérisé en ce qu'**il comprend un dispositif cache-bagages comprenant au moins un écran d'occultation, mobile entre une position repliée et une position déployée,
et **en ce qu'**il comprend un volet solidaire dudit hayon, et mobile par rapport à ce dernier en rotation autour d'un axe de rotation, ledit axe de rotation étant perpendiculaire à l'axe de déplacement dudit écran, et s'étendant au voisinage d'une barre de tirage dudit écran, lorsque ce dernier est dans ladite position déployée, et sensiblement dans le plan défini par ledit écran, de façon à pouvoir prendre au moins deux positions :
- une position fermée, dans laquelle il se trouve dans le prolongement dudit écran, lorsque celui-ci se trouve dans sa position déployée ; et
- une position ouverte, permettant un accès au coffre dudit véhicule, même lorsque ledit écran est dans sa position déployée.

8. Véhicule automobile selon la revendication 7, dont ledit hayon présente une baie équipée d'une vitre ouvrante, **caractérisé en ce que** ledit volet est monté de façon à permettre un accès audit coffre, par l'intermédiaire de ladite baie, vitre ouverte, ledit hayon restant fermé.
